Europäisches Patentamt

European Patent Office

Office européen des brevets

(19)

(11) Veröffentlichungsnummer : **0 046 924**
**B1**

(12) **EUROPÄISCHE PATENTSCHRIFT**

(45) Veröffentlichungstag der Patentschrift :
13.06.84

(21) Anmeldenummer : 81106422.9

(22) Anmeldetag : 19.08.81

(51) Int. Cl.³ : **C 01 B 25/41**, C 01 B 25/445,
C 01 B 25/39

(54) Verfahren zur Herstellung eines schnelllöslichen Polyphosphatglases.

(30) Priorität : 03.09.80 DE 3033066

(43) Veröffentlichungstag der Anmeldung :
10.03.82 Patentblatt 82/10

(45) Bekanntmachung des Hinweises auf die Patenterteilung : 13.06.84 Patentblatt 84/24

(84) Benannte Vertragsstaaten :
AT BE CH DE FR GB IT LI NL SE

(56) Entgegenhaltungen :
DE-B- 2 139 817
DE-C- 900 338
FR-A- 1 322 071
US-A- 2 940 938
Die Akte enthält technische Angaben, die nach dem Eingang der Anmeldung eingereicht wurden und die nicht in dieser Patentschrift enthalten sind.

(73) Patentinhaber : Giulini Chemie GmbH
Giulinistrasse 2 Postfach 123
D-6700 Ludwigshafen/Rhein (DE)

(72) Erfinder : Förster, Hans-Joachim, Dr. Dipl.-Chem.
Osterweg 1
D-6830 Schwetzingen (DE)
Erfinder : Terasa, Otto
Langgewannstrasse 50
D-6720 Speyer (DE)
Erfinder : Egner, Manfred, Ing. grad.
Berlinersstrasse 7
D-6831 Brühl (DE)

(74) Vertreter : Benatzky, Erika, Dr.
Giulinistrasse 2
D-6700 Ludwigshafen/Rh. (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**0 046 924**

**Beschreibung**

Gegenstand der vorliegenden Erfindung ist ein Verfahren zur Herstellung eines schnellöslichen und gut rieselfähigen Alkalipolyphosphatglases mit niedrigem Schüttgewicht, durch mehrmalige Aufbringung von Polyäthylenglykollösung auf feinvermahlenes Alkalipolyphosphatglas und jeweils daran anschließendes Wegtrocknen des aufgebrachten Wassers mittels Heißluft.

Glasige Alkalipolyphosphate, d. h. Schmelzgemische mittel- und langkettiger Alkalipolyphosphate, werden schon seit langem industriell eingesetzt, z. B. als Kalkbinde- und Wasserenthärtungsmittel, als Korrosionsschutzmittel, Hilfsmittel in der Textil- und Färbeindustrie sowie in der Milch-, Käse- und Fleischindustrie.

Ein Nachteil dieser Gläser liegt nun darin, daß sie stark hygroskopisch sind und an feuchter Luft zusammenkleben und zerfließen. Beim Auflösen in Wasser entstehen zähe Massen, die sich nur sehr langsam auflösen. Dies hat dazu geführt, daß zahlreiche Untersuchungen zur Verbesserung ihrer Eigenschaften durchgeführt worden sind. Auch sind bereits viele, in der Praxis mit mehr oder weniger Erfolg angewandte Lösungswege aufgezeigt worden. Hinsichtlich Löslichkeit und Lagerfähigkeit werden jedoch die bis jetzt erzielten Verbesserungen auf bestimmten Anwendungsbereichen noch nicht als ausreichend angesehen.

In der DE-C-900 338 wird beispielsweise vorgeschlagen, pulverförmige Polyphosphatgläser mit Wasser zu befeuchten und durch anschließende Erhitzung an der Oberfläche der Teilchen einen Überzug aus einer nicht hygroskopischen sauren Phosphatverbindung zu bilden. Gemäß einer besonderen Ausführungsweise können dem pulverförmigen Polyphosphatglas vor oder nach seiner verfahrensgemäßen Behandlung wasserlösliche, in Gegenwart von Wasser und den verfahrensgemäß entstandenen sauren Umwandlungsprodukten zur Gasentwicklung befähigte pulverförmige Stoffe, wie Natriumcarbonat und Natriumsulfit, in Mengen von 1 bis 20 % des Phosphatglases zugemischt werden.

Das beim Zusammenbringen des Pulvers mit Wasser entstehende Gas soll dann die einzelnen Polyphosphatteilchen unter gleichzeitiger Suspendierung in Wasser auseinandersprengen, so daß die Teilchen selbst ohne Rühren in kürzester Zeit in Lösung gehen sollen.

Gemäß einem weiteren Vorschlag in der DE-B-2 139 817 werden rasch lösliche und frei fließende Alkalipolyphosphatgläser in der Weise hergestellt, daß das Wasseraufbringen sowie das Wegtrocknen mehrmals hintereinander erfolgen, wobei jeweils maximal 2 Gew.-%, vorzugsweise weniger als 1,6 Gew.-% Wasser, bezogen auf das Glasgewicht, aufgebracht werden und die Heißlufttemperatur zwischen 50 und 120 °C, vorzugsweise zwischen 65 und 105 °C liegt. Auf diese Weise soll die beim Arbeiten gemäß der DE-C-903 338 beobachtete starke Hydrolyse des Polyphosphats verhindert werden. Auch sollen dadurch in den Apparateteilen zähklebrige Ablagerungen, die zu Verstopfungen und schließlich zum Betriebsstillstand führen können, verhütet werden. Insbesondere sollen die beim Eingießen in Wasser zu beobachtenden Verklumpungen und beim offenen Stehen bei mäßigeren Luftfeuchtigkeiten zu beobachtenden Zusammenbackungen vermieden werden.

· Schließlich ist aus der FR-A-1 322 071 noch die Behandlung von Polyphosphatgläsern bekannt, jedoch ist bei den dort angewandten Mengen und Behandlungsmethoden ein Zusatz von sauren oder alkalischen Stoffen erforderlich.

Wie bereits erwähnt worden ist, sind jedoch die Eigenschaften der nach bekannten Verfahren hergestellten Polyphosphatgläser auf manchen Arbeitsgebieten noch nicht zufriedenstellend. Das trifft insbesondere für solche Gläser zu, die in wäßriger Lösung (1 %ig) einen pH-Wert > 7 zeigen.

Aufgabe der vorliegenden Erfindung ist daher die Herstellung frei fließender und rasch löslicher Alkalipolyphosphatgläser, insbesondere Phosphatgläser mit einem pH-Wert > 7.

Die gestellt Aufgabe kann überraschend in einfacher Weise mit einem Verfahren gelöst werden, bei dem jeweils eine wäßrige Polyäthylenglykollösung auf Polyphosphatglasteilchen, die bei der Siebanalyse auf 200 μm maximal einen Rückstand von 1 % ergeben, aufgesprüht wird, das aufgebrachte Wasser mit Heißluft bei einer Temperatur > 120 °C, insbesondere Heißluft mit einer Temperatur von 125 bis 135 °C, auf eine Restfeuchte < 0,2 Gew.-% abgetrocknet wird, wobei die insgesamt eingebrachte Wassermenge in Abhängigkeit vom pH-Wert des Alkalipolyphosphatglases bei maximal 8 Gew.-% und die insgesamt eingebrachte Polyäthylenglykolmenge bei maximal 0,32 Gew.-% liegt, bezogen auf das Alkalipolyphosphatglas.

Zweckmäßigerweise wird so gearbeitet, daß auf Polyphosphatgläser mit einem pH-Wert > 7 maximal 8 Gew.-% Wasser aufgebracht werden. Die Konzentration der Polyäthylenglykollösung sollte zwischen 1 und 8 Gew.-% liegen, beträgt jedoch vorteilhafterweise 2 bis 4 %.

Ein wesentliches Kennzeichen des neuen Verfahrens wird darin gesehen, daß als Ausgangsstoff extrem feingemahlene Polyphosphatgläser eingesetzt werden. Liegt der Rückstand bei der Siebanalyse auf 200 μm bei etwa 20 %, so werden erheblich schlechtere Ergebnisse erzielt.

Das Verfahren der vorliegenden Anmeldung kann sowohl chargenweise als auch kontinuierlich in einem Wirbelschichtofen ausgeführt werden. In den Beispielen wurde ein Wirbelschichtofen verwendet, der oberhalb des Anströmbodens mit einem Rührwerk ausgerüstet ist. Zur Erzeugung der Wirbelschicht wurden jeweils 30 m³ Luft/kg/h Polyphosphatglas eingeblasen.

Die Schichtdicke des Polyphosphatglases in Ruhestellung betrug 60 mm. Die Polyäthylenglykollö-

**0 046 924**

sung wurde über mehrere Düsen mit einer Gesamtleistung von 45 ml/min bei 4 bar eingedüst. Berechnet auf eingesetztes Polyphosphatglas wurden insgesamt 8 % Polyäthylenglykollösung eingedüst, und zwar in 5 Intervallen. Nach Verdüsung der Polyäthylenglykollösung erfolgte jeweils eine Trocknung auf 0,2 % Restfeuchte. Das Endprodukt wurde auf seine Löseeigenschaften, Hygroskopizität, Schüttgewicht und Restfeuchte untersucht. Das Polyäthylenglykol hatte ein durchschnittliches Molekulargewicht von 18 000.

Die Untersuchungen wurden unter folgenden Bedingungen durchgeführt :

### Lösegeschwindigkeit

In einem 1 l-Becherglas (hohe Form) wird in 1 l destilliertem Wasser 30 g der zu prüfenden Substanz über einen Trichter 8 cm über Becherglasrand eingetragen. Nach 5 min Standzeit wird mit einem Rührer in L-Form, Länge insgesamt 20 cm, Durchmesser 6 mm, mit einer Flügellänge von 1 cm, mit 1 500 UpM gerührt. Der Abstand vom Glasboden zu Rührflügel beträgt 3 cm. Die Wassertemperatur wird konstant auf 20 °C gehalten. Die Lösezeit wird gemessen vom Zeitpunkt des Eintragens bis zur vollständigen Lösung und in Sekunden angegeben.

### Hygroskopizitätstest

20 g Material werden in einem ungefütterten Briefumschlag 4 Std. in eine Kammer mit einer relativen Luftfeuchtigkeit von 95 % eingehängt. Nach 4 Stunden wird der Inhalt des Umschlages über ein 2 mm Sieb bei leichter Rüttelbewegung abgesiebt. Der auf dem Sieb verbleibende Rückstand wird gewogen und in Prozent verbackenes Material angegeben.

### Schüttgewicht

Das Schüttgewicht wird durch loses Einschütten über einen Trichter in einem 100 ml Meßzylinder ermittelt.

### Restfeuchte

Die Restfeuchte wird ermittelt durch Trocknen des Materials bei 105 °C.

### Ausgangsmaterial

| | |
|---|---|
| Löseeigenschaft | 600 Sek. |
| Hygroskopizität | 100 % Verbackung |
| Schüttgewicht | 1,15 kg/l |

### Beispiel 1

5 kg Natriumhexametaphosphat mit einem pH-Wert von 8,2, gemessen in 1 %iger Lösung, und einem Grobanteil von 19 % > 200 µm wurden mit Wasser in oben beschriebener Apparatur behandelt. Das so instantisierte Material hatte eine

| | |
|---|---|
| Lösezeit | 540 Sek. |
| Hygroskopizität | 9C % Verbackung |
| Schüttgewicht | 1,1 kg/l |
| Restfeuchte | 0,18 % |

### Beispiel 2

Wie Beispiel 1, nur wurde anstelle von Wasser eine 8 %ige Polyäthylenglykollösung aufgesprüht. Außerdem wurde das Ausgangsmaterial so vermahlen, daß auf 200 µm ein Rückstand von 1 % verblieb.

| | |
|---|---|
| Lösezeit | 300 Sek. |
| Hygroskopizität | 15 % Verbackung |
| Schüttgewicht | 850 g/l |
| Restfeuchte | 0,2 % |

**Ansprüche**

1. Verfahren zur Herstellung eines schnelllöslichen, gut rieselfähigen und verbackungsfreien Alkalipolyphosphatglases durch wiederholtes Aufbringen von Wasser auf feingemahlenes Polyphosphatglas und jeweils daran anschließendes teilweises oder vollständiges Wegtrocknen des aufgebrachten Wassers mit Heißluft im Wirbelbett, dadurch gekennzeichnet, daß jeweils eine wäßrige Polyäthylenglykollösung auf Polyphosphatglasteilchen, die bei der Siebanalyse auf 200 μm maximal einen Rückstand von 1 % ergeben, aufgesprüht wird, das aufgebrachte Wasser mit Heißluft bei einer Temperatur > 120 °C, insbesondere Heißluft mit einer Temperatur von 125 bis 135 °C, auf eine Restfeuchte < 0,2 Gew.-% abgetrocknet wird, wobei die insgesamt eingebrachte Wassermenge in Abhängigkeit vom pH-Wert des Alkalipolyphosphatglases bei maximal 8 Gew.-% und die insgesamt eingebrachte Polyäthylenglykolmenge bei maximal 0,32 Gew.-% liegt, bezogen auf das Alkalipolyphosphatglas.

2. Verfahren nach Anspruch 1, dadurch gekennzeichnet, daß bei einem Polyphosphatglas mit einem pH-Wert größer als 7 maximal 8 Gew.-% Wasser aufgesprüht werden.

3. Verfahren nach den Ansprüchen 1 und 2, dadurch gekennzeichnet, daß eine Polyäthylenglykollösung aufgesprüht wird, die ein Polyäthylenglykol mit einem durchschnittlichen Molekulargewicht von 13 000-20 000 enthält.

4. Verfahren nach dem Anspruch 3, dadurch gekennzeichnet, daß ein Polyäthylenglykol mit einem durchschnittlichen Molekulargewicht von 15 000-18 000 aufgesprüht wird.

5. Verfahren nach den Ansprüchen 1-4, dadurch gekennzeichnet, daß eine 1 bis 8 %ige, insbesondere 2-4 %ige Polyäthylenglykollösung aufgesprüht wird.

6. Verfahren nach den Ansprüchen 1-5, dadurch gekennzeichnet, daß die Aufsprühung der Polyäthylenglykollösung und Wegtrocknung des Wassers 5 bis 7 mal erfolgt.

7. Verfahren nach den Ansprüchen 1-6, dadurch gekennzeichnet, daß Aufsprühung und Wegtrocknung des Wassers kontinuierlich erfolgt.

## Claims

1. Process for producing a fast-dissolving, highly flowable and clump-free alkali metal polyphosphate glass by repeatedly applying water to finely ground polyphosphate glass and subsequently partially or totally drying off the water applied using hot air in a fluidised bed, characterised in that an aqueous polyethyleneglycol solution is sprayed on to polyphosphate glass particles which when subjected to screen analysis to a maximum of 200 μm give a residue of 1 %, the water applied is dried off with hot air at a temperature > 120 °C, particularly hot air at a temperature of 125 to 135 °C, to a residual moisture content of < 0.2 % by weight, the total quantity of water added being at most 8 % by weight, depending on the pH of the alkali metal polyphosphate glass, whilst the total quantity of polyethyleneglycol added is at most 0.32 % by weight, based on the alkali metal polyphosphate glass.

2. Process as claimed in claim 1, characterised in that, in the case of a polyphosphate glass with a pH higher than 7, not more than 8 % by weight of water is sprayed on.

3. Process as claimed in claims 1 and 2, characterised in that a polyethyleneglycol solution is sprayed on which contains a polyethyleneglycol with an average molecular weight of 13,000-20,000.

4. Process as claimed in claim 3, characterised in that a polyethyleneglycol with an average molecular weight of 15,000-18,000 is sprayed on.

5. Process as claimed in claims 1-4, characterised in that a 1 to 8 %, more particularly a 2-4 %, polyethyleneglycol solution is sprayed on.

6. Process as claimed in claims 1-5, characterised in that the spraying on of the polyethyleneglycol solution and drying off of the water are carried out 5 to 7 times.

7. Process as claimed in claims 1-6, characterised in that the spraying on and drying off of the water are effected continuously.

## Revendications

1. Procédé de fabrication d'un verre de polyphosphate alcalin à dissolution rapide, qui ruisselle bien et qui est exempt d'agglomérat, par application répétée d'eau sur le verre de polyphosphate finement broyé et chaque fois, à la suite de cela, par enlèvement total ou partiel par séchage de l'eau appliquée avec de l'air chaud en lit fluidisé, caractérisé en ce que chaque fois on pulvérise une solution aqueuse de polyéthylène glycol sur les particules de verre de polyphosphate qui présentent à l'analyse au tamis de 200 μm au maximum un résidu de 1 %, on enlève par séchage l'eau appliquée avec de l'air chaud à une température supérieure à 120 °C, en particulier avec de l'air chaud à une température de 125 à 135 °C, jusqu'à une humidité résiduelle inférieure à 0,2 % en poids, la quantité d'eau appliquée en tout étant en fonction de la valeur du pH du verre de polyphosphate alcalin au maximum de 8 % en poids et la quantité appliquée en tout de polyéthylène glycol étant au maximum de 0,32 % en poids, par rapport au verre de polyphosphate alcalin.

2. Procédé selon la revendication 1, caractérisé en ce que dans le cas d'un verre de polyphosphate ayant une valeur de pH supérieure à 7 on pulvérise un maximum de 8 % en poids d'eau.

3. Procédé selon les revendications 1 et 2, caractérisé en ce qu'on pulvérise une solution de polyéthylène glycol qui contient un polyéthylène glycol ayant un poids moléculaire moyen de 13 000 à 20 000.

4. Procédé selon la revendication 3, caractérisé en ce qu'on pulvérise un polyéthylène glycol ayant un poids moléculaire moyen de 15 000 à 18 000.

5. Procédé selon les revendications 1 à 4, caractérisé en ce qu'on pulvérise une solution de polyéthylène glycol à 1-8 %, en particulier à 2-4 %.

6. Procédé selon les revendications 1 à 5, caractérisé en ce que la pulvérisation de la solution de polyéthylène glycol et le séchage pour l'élimination de l'eau ont lieu 5 à 7 fois.

7. Procédé selon les revendications 1 à 6, caractérisé en ce que la pulvérisation et le séchage pour l'élimination de l'eau se font en continu.